# EUROPEAN PATENT APPLICATION

(11) **EP 4 451 364 A1**
(43) Date of publication of application: **23.10.2024**
(21) Application number: 24159605.5
(22) Date of filing: 26.02.2024
(51) Int. Cl.: H01M 4/133, H01M 4/134, H01M 4/36, H01M 4/38, H01M 4/587, H01M 10/052, H01M 4/02

(54) **NEGATIVE ACTIVE MATERIAL AND RECHARGEABLE LITHIUM BATTERY INCLUDING THE SAME**

(30) Priority: 17.04.2023 KR 20230050272
(71) Applicant: Samsung SDI Co., Ltd., Yongin-si, Gyeonggi-do 17084 (KR)
(72) Inventor: OH, Doori, 17084 Yongin-si (KR); KIM, Youngugk, 17084 Yongin-si (KR); KIM, Yookyung, 17084 Yongin-si (KR); KIM, Young-Min, 17084 Yongin-si (KR); PARK, Sunil, 17084 Yongin-si (KR); LEE, Jungho, 17084 Yongin-si (KR); WON, Jongmin, 17084 Yongin-si (KR); NAH, Jaehou, 17084 Yongin-si (KR); KANG, Eunji, 17084 Yongin-si (KR); LEE, Dae-Hyeok, 17084 Yongin-si (KR); SHIN, Changsu, 17084 Yongin-si (KR)
(74) Representative: Marks & Clerk LLP

(57) **Abstract**

A negative active material and a rechargeable lithium battery including the negative active material. The negative active material includes first, second and third active materials. The first active material is a crystalline carbon. The second active material includes a first core, which includes crystalline carbon and a silicon-based material, and a first carbon coating layer positioned on the first core. The third active material includes a second core, which includes a silicon-based material, and a second carbon coating layer positioned on the second core.

## Description

### BACKGROUND

### 1. Field

Embodiments are directed to a negative active material and a rechargeable lithium battery including the negative active material.

### 2. Description of the Related Art

Recently, the rapid development of electronic devices such as mobile phones, laptop computers, and electric vehicles using batteries has resulted in surprising increases in demand for rechargeable lithium batteries with relatively high capacity and lighter weight. For example, a rechargeable lithium battery has recently drawn attention as a driving power source for portable devices, as it has lighter weight and high energy density. Accordingly, research for improving performance of rechargeable lithium batteries is actively being conducted.

The demand of a higher capacity per volume of the rechargeable lithium battery requires mainly using silicon-based active materials, and for example, the demands for the negative electrode to exhibit a higher specific capacity are also increasing.

### SUMMARY

Embodiments are directed to a negative active material exhibiting excellent cycle-life characteristics and excellent high-rate charge and discharge capability.

Some embodiments are directed to a rechargeable lithium battery including the negative active material.

Embodiments are directed to a negative active material including a first, second and third active material. The first active material is a crystalline carbon. The second active material includes a first core, which includes crystalline carbon and a silicon-based material. A first carbon coating is positioned on the first core. The third active material includes a second core, which includes a silicon-based material. A second carbon coating layer is positioned on the second core.

In some embodiments, the crystalline carbon may include natural graphite, artificial graphite, or a combination thereof.

In some embodiments, the silicon-based material may include silicon, silicon oxide, or a combination thereof.

In some embodiments, the second carbon coating layer may be amorphous carbon or semi-crystalline carbon.

In some embodiments, the first carbon coating layer may be amorphous carbon.

In some embodiments, in the second active material, the amount of the crystalline carbon may be about 35 wt% to about 45 wt% based on the total 100 wt% of the second active material, an amount of the silicon-based material may be about 35 wt% to about 45 wt% based on the total 100 wt% of the second active material, and an amount of the first carbon coating layer (e.g., amorphous carbon) is about 15 wt% to about 25 wt% based on the total 100 wt% of the second active material.

In some embodiments, the mixing ratio of the first active material, the second active material, and the third active material may be about 50:12:38 to about 50:38: 12 by a weight ratio, and according to one or more embodiments, a mixing ratio of the first active material, the second active material, and the third active material may be about 50:15:35 to about 50:35:15 by weight ratio.

In some embodiments, the third active material may have a spherical shape. In some embodiments, the third active material may have a flat surface or may have a corrugated surface.

Some embodiments are directed to a rechargeable lithium battery including a negative electrode including the negative active material, a positive electrode, and an electrolyte.

At least some of the above and other features of the invention are set out in the claims.

The negative active material according to the embodiments has an excellent cycle-life characteristic and excellent high-rate charge and discharge characteristics.

### BRIEF DESCRIPTION OF THE DRAWINGS

Features will become apparent to those of skill in the art by describing in detail embodiments with reference to the attached drawings in which:

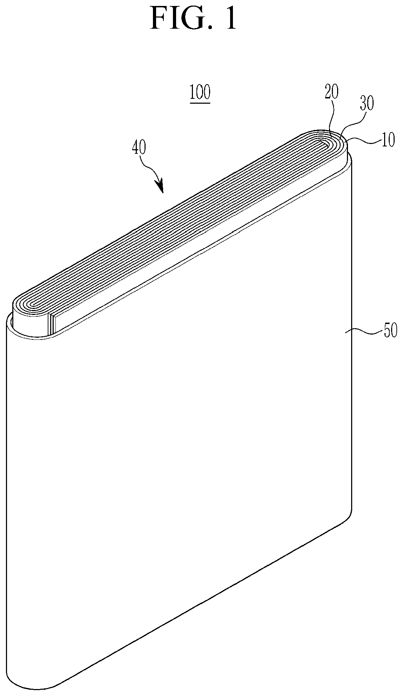

FIG. 1 is a schematic diagram illustrating a rechargeable lithium battery according to one or more embodiments.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey implementations to those skilled in the art.

In the drawing figures, the dimensions of layers and regions may be exaggerated for clarity of illustration.

The term "combination thereof' may include a mixture, a laminate, a complex, a copolymer, an alloy, a blend, a reactant of constituents.

The terms "comprise", "include" or "have" are intended to designate that the performed characteristics, numbers, steps, constituted elements, or a combination thereof is present, but it should be understood that the possibility of presence or addition of one or more other characteristics, numbers, steps, constituted elements, or a combination are not to be precluded in advance.

The drawings may show enlarged thicknesses in order to clearly show the various layers and regions, and the same reference numerals are given to similar parts throughout the specification.

In the present disclosure, when a definition is not otherwise provided, a particle diameter or size may be an average particle diameter. Such a particle diameter indicates an average particle diameter (D50) where a cumulative volume is about 50 volume% in a particle size distribution. The average particle size (D50) may be measured by a method well known to those skilled in the art, for example, by a particle size analyzer, or by a transmission electron microscopic image, or a scanning electron microscopic image. Alternatively, a dynamic light-scattering measurement device is used to perform a data analysis, and the number of particles is counted for each particle size range, and from this, the average particle diameter (D50) value may be easily obtained through a calculation. It may be measured by a laser diffraction method. The laser diffraction may be obtained by distributing particles to be measured in a distribution solvent and introducing it to a commercially available laser diffraction particle measuring device (e.g., MT 3000 available from Microtrac, Ltd.), irradiating ultrasonic waves of about 28 kHz at a power of 60 W, and calculating an average particle diameter (D50) in the 50% standard of particle distribution in the measuring device.

A "thickness" may be measured through a photograph taken with an optical microscope such as a scanning electron microscope, for example.

A negative active material according to one or more embodiments includes: a crystalline carbon first active material; a second active material comprising a first core, which comprises crystalline carbon and a silicon-based material, and a first carbon coating layer positioned on the first core, and a third active material comprising a second core, which comprises a silicon-based material, and a second carbon coating layer positioned on the second core.

For example, a negative active material according to one or more embodiments may include a crystalline carbon first active material, a second active material including crystalline carbon, a silicon-based material, and an amorphous carbon, and a third active material including semi-crystalline carbon or amorphous carbon and a silicon-based material.

As such, the negative active material according to one or more embodiments includes three active materials: the first active material, the second active material, and the third active material.

The first active material is crystalline carbon. The crystalline carbon may be natural graphite, artificial graphite, or a combination thereof. The shape of the crystalline carbon is not limited, and for example, may be any shape such as an unspecified shape, a sheet shape, a flake shape, a spherical shape, or a fiber shape. There is no need to limit the size of the crystalline carbon.

The second active material may include a crystalline carbon, a silicon-based material, and an amorphous carbon, and may be a three-component material. The silicon-based material may be silicon (Si, referring to elemental Si), silicon oxide (SiOₓ, 0<x≤2), or a combination thereof.

The shape of the silicon-based material is not limited. The size of the silicon-based material may be about 10 nm to about 1 µm, and for example, the size of silicon-based material may be about 10 nm to about 200 nm.

In one or more embodiments, the second active material includes a first core including a crystalline carbon and a silicon-based material and a first carbon coating layer positioned on the first core. For example, the second active material may include a first core including an agglomerated product, in which the crystalline carbon and the silicon-based material are agglomerated, and a first carbon coating layer coated on the agglomerated product.

In the second active material, the crystalline carbon may be natural graphite, artificial graphite, or a combination thereof.

The first carbon coating layer may be an amorphous carbon. The amorphous carbon may be soft carbon, hard carbon, mesophase pitch carbide, sintered coke, or a combination thereof.

In the second active material, amounts of the crystalline carbon, the silicon-based material and the first carbon coating layer, for example, the amorphous carbon, may be suitably adjusted according to the desired capacity. In one or more embodiments, the amount of the crystalline carbon may be about 35 wt% to about 45 wt%, or about 38 wt% to about 42 wt% based on the total 100 wt% of the second active material. The amount of the silicon-based material may be about 35 wt% to about 45 wt% based on the total 100 wt% of the second active material, or about 38 wt% to about 42 wt%, the amount of the first carbon coating layer, for example, amorphous carbon, may be about 15 wt% to about 25 wt% based on the total 100 wt% of the second active material, or about 18 wt% to about 22 wt%.

In one or more embodiments, the second active material may have an unspecific shape that is not a limited shape and may be any of various shapes. The second active material may have an average size of about 8 µm to about 15 µm.

In one or more embodiments, the second active material may be prepared by any procedure, as long as it includes the first core including the crystalline carbon and the silicon-based material and the first carbon coating layer positioned on the first core. For example, the second active material may be prepared by mixing the silicon-based material and the crystalline carbon to prepare a mixture, mixing the mixture with an amorphous carbon precursor, and heat-treating. The amorphous carbon precursor may include coal pitch, meso pitch, mesophase pitch, petroleum pitch, meso carbon pitch, coal oil, petroleum heavy oil, or a polymer resin such as a phenol resin, a furan resin, or a polyimide resin.

The third active material may be a two-component material including the silicon-based material and the second carbon coating layer.

The second carbon coating layer may be a semi-crystalline carbon or an amorphous carbon.

The third active material includes a second core including a silicon-based material and a second carbon coating layer positioned on the second core.

In one or more embodiments, a mixing ratio of the silicon-based material and the second carbon coating layer, for example, the semi-crystalline carbon or the amorphous carbon may have a weight ratio of about 6:4 to about 8:2, or a weight ratio of about 7:3 to about 8:2.

In one or more embodiments, the amorphous carbon may be soft carbon, hard carbon, mesophase pitch carbide, sintered cokes, or a combination thereof. The semi-crystalline carbon may be carbonaceous material with higher crystallinity than such an amorphous carbon and with lower crystallinity than crystalline carbon such as graphite.

The silicon-based material may be silicon (Si), silicon oxide (SiOₓ, 0<x≤2), or a combination thereof. The shape of the silicon-based material is not limited. The size of the silicon-based material may be about 10 nm to about 1 µm, for example, the size of silicon may be about 10 nm to about 200 nm.

The second coating layer may be prepared by physical coating, for example, by a chemical vapor deposition (CVD).

The deposition may be a chemical vapor deposition (CVD). The deposition may be carried out at a temperature of about 1000 °C or more, for example, at about 1000 °C to about 1100 °C. The deposition may be performed by using a carbon gas. For example, the deposition may be performed by injecting the carbon gas into the silicon-based material.

The carbon gas may be a methane (CH₄) gas, an ethylene (C₂H₄) gas, an acetylene (C₂H₂) gas, a propane (C₃H₈) gas, a propylene (C₃H₆) gas, or a combination thereof. According to the deposition, the carbon gas is decomposed to generate a semi-crystalline carbon or an amorphous carbon which may prepare a coating layer surrounding the surface of the silicon-based material. In some embodiments, a carbon layer in a protruded form from the surface of the silicon-based material towards the outside, for example, with ridges and valleys formed on the surface, may be formed.

Because the second carbon coating layer may be formed by the chemical vapor deposition, protrusions and depressions may be formed on the surface of the third active material. Alternatively, the third active material may have a flat surface. Depending on the type of the carbon gas used in the chemical vapor deposition, the temperature and the deposition time, the coating layer may be unevenly formed to resultantly form protrusions and depressions or may be flatly formed to resultantly form the flat surface. For example, as the decomposition temperature of the carbon gas is higher, for example, higher than about 700 °C, protrusions and depressions may be formed. Generally, because a methane gas, an ethylene gas, and an acetylene gas have low decomposition temperature in that order, use of a propane (C₃H₈) gas or a propylene (C₃H₆) gas may cause protrusions and depressions to form. The use of a methane (CH₄) gas, an ethylene (C₂H₄) gas, an acetylene (C₂H₂) gas may cause a flat surface to form. As the deposition time increases, protrusions and depressions may be formed.

If the second carbon coating layer has corrugations, the crystallinity is slightly higher, which may result in a semi-crystalline carbon layer.

If protrusions and depressions are formed on the surface of the third active material, the third active material may have an urchin-type shape. If the third active material has an urchin-type shape, the length from a surface to an end of an outward protrusion and depression may be more than about 0 nm and about 100 nm or less. The length from the surface of the second carbon coating layer to the end of the outward protrusion and depression may be more than 0 nm to about 100 nm or less.

The thickness of the second carbon coating layer may be about 1 nm to about 2000 nm, or about 1 nm to about 1000 nm. If the thickness of the second carbon coating layer is within the range, the charge and discharge efficiency and the charge and discharge rate capability may be improved.

In one or more embodiments, the third active material may have a spherical shape and may be a spherical oval shape, even if it has protrusions and depressions on the surface. If the third active material has a spherical shape, the electrode density may be improved and low specific surface area may be advantageous for a long cycle-life and expansion. The average particle diameter of the third active material may be about 1 µm to about 9 µm.

The first active material is crystalline carbon and its higher conductivity may reduce the resistance of the negative electrode and its slightly soft powder characteristics may increase density.

The second active material includes a crystalline carbon, which improves the conductivity and the cycle-life characteristics. The second active material may have unsuitable volume expansion during charging and discharging, but such a volume expansion may be suppressed by the third active material. The third active material may effectively suppress the volume expansion during charging and discharging and the somewhat low conductivity of the third active material may be compensated for by the second active material.

As such, the negative active material according to one or more embodiments includes the three active materials; that is, the first active material, the second active material, and the third active material, so that the advantages of each may be included and the drawbacks of each may be compensated for.

The compensation effects of using the first active material, the second active material, and the third active material may be more effectively obtained if the mixing ratio of the first active material, the second active material, and the third active material is about 50:12:38 by weight ratio to about 50:38:12 by weight ratio, and according to one or more embodiments, about 50: 15:35 by weight ratio to about 50:35:15 by weight ratio.

If the mixing ratio of the first active material, the second active material, and the third active material is within these ranges, the cycle-life and expansion characteristics may be improved.

The negative active material according to one or more embodiments may have a Brunauer-Emmett-Teller (BET) specific surface area of about 1.5 m²/g to about 2 m²/g, or about 1.6 m²/g to about 2 m²/g. If the BET specific surface area of the negative active material is satisfied into the range, the occurrence of the side reactions may be sufficiently suppressed.

Such a negative active material may be appropriately applied to a rechargeable lithium battery.

A rechargeable lithium battery according to one or more embodiments includes a negative electrode, a positive electrode, and an electrolyte.

In one or more embodiments, the tapped density of the negative electrode may be about 0.95 g/cc or more, or about 0.95 g/cc to about 1.2 g/cc. If the tapped density of the negative electrode is within the range, the suitable capacity may be exhibited.

In one or more embodiments, the tapped density may be obtained by averaging the values obtained from three measurements by applying pressure of about 108N using the GeoPyc 1360 Pycnometer available from Micromeritics Instruments Corporation, into which a chamber having a diameter of about 19.1 mm and with a conversion factor of 0.2907 cm³/mm is inserted.

The negative electrode includes a current collector and a negative active material layer positioned on at least one surface of the current collector.

The negative active material layer according to one or more embodiments includes the negative active material and a binder, and optionally may include a conductive material.

In the negative active material layer, the amount of the negative active material may be about 95 wt% to about 98 wt% based on the total 100 wt% of the negative active material layer.

The negative active material layer may include a binder and may further include a conductive material. The amount of the binder may be about 1 wt% to about 5 wt% based on the total 100 wt% of the negative active material layer. The amount of the conductive material may be about 1 wt% to about 5 wt% based on the total 100 wt% of the negative active material layer.

The binder improves binding properties of negative active material particles with one another and with a current collector. The binder may be a non-aqueous binder, an aqueous binder, or a combination thereof.

The non-aqueous binder may be an ethylene propylene copolymer, polyacrylonitrile, polystyrene, polyvinylchloride, carboxylated polyvinylchloride, polyvinyl fluoride, polyurethane, polytetrafluoroethylene, polyvinylidene fluoride, polyethylene, polypropylene, polyamide imide, polyimide, or combinations thereof.

The aqueous binder may be a styrene-butadiene rubber (SBR), an acrylated styrene-butadiene rubber (ABR), an acrylonitrile-butadiene rubber, an acrylic rubber, a butyl rubber, a fluorine rubber, an ethylene oxide-containing polymer, polyvinyl pyrrolidone, polypropylene, polyepichlorohydrin, polyphosphazene, an ethylene propylene diene copolymer, polyvinyl pyridine, chlorosulfonated polyethylene, latex, a polyester resin, an acrylic resin, a phenolic resin, an epoxy resin, polyvinyl alcohol, or combinations thereof.

If the aqueous binder is used as a negative electrode binder, a cellulose-based compound may be further used to provide viscosity as a thickener. The cellulose-based compound includes one or more of carboxymethyl cellulose, hydroxypropylmethyl cellulose, methyl cellulose, or alkali metal salts thereof. The alkali metal may be Na, K, or Li. The thickener may act as a thickener for providing viscosity and may act as a binder. The thickener may be included in an amount of about 0.1 parts by weight to about 3 parts by weight based on 100 parts by weight of the negative active material.

The conductive material is included to provide electrode conductivity, and any electrically conductive material may be used as a conductive material unless it causes a chemical change. Examples of the conductive material may be a carbon-based material such as natural graphite, artificial graphite, carbon black, acetylene black, ketjen black, a carbon fiber, and the like; a metal-based material of a metal powder or a metal fiber including copper, nickel, aluminium, silver, and the like; a conductive polymer such as a polyphenylene derivative; or a mixture thereof.

The current collector may include one selected from a copper foil, a nickel foil, a stainless-steel foil, a titanium foil, a nickel foam, a copper foam, a polymer substrate coated with a conductive metal, and a combination thereof.

The positive electrode may include a current collector and a positive active material layer formed on the current collector.

The positive active material may include lithiated intercalation compounds that reversibly intercalate and deintercalate lithium ions. In some embodiments, one or more composite oxides of a metal selected from cobalt, manganese, nickel, and a combination thereof, and lithium, may be used. For example, the compounds represented by one of the following chemical formulae may be used. LiₐA_{1-b}X_{b}D₂ (0.90≤a≤1.8, 0≤b≤0.5); LiₐA_{1-b}X_{b}O_{2-c}D_{c} (0.90<a<1.8, 0≤b≤0.5, 0≤c≤0.05); LiₐE_{1-b}X_{b}O_{2-c}D_{c} (0.90<a<1.8, 0≤b≤0.5, 0≤c≤0.05); LiₐE_{2-b}X_{b}O_{4-c}D_{c} (0.90≤a≤1.8, 0≤b≤0.5, 0≤c≤0.05); LiₐNi_{1-b-c}Co_{b}X_{c}D_{α} (0.90≤a≤1.8, 0≤b≤0.5, 0≤c≤0.5, 0<α≤2); LiₐNi_{1-b-c}Co_{b}X_{c}O_{2-α}T_{α} (0.90≤a≤1.8, 0≤b≤0.5, 0≤c≤0.5, 0<α≤2); LiₐNi_{1-b-c}Co_{b}X_{c}O_{2-α}T₂ (0.90≤a≤1.8, 0≤b≤0.5, 0≤c≤0.5, 0<α≤2); LiₐNi_{1-b-c}Mn_{b}X_{c}D_{α} (0.90≤a≤1.8, 0≤b≤0.5, 0≤c≤0.5, 0<α≤2); LiₐNi_{1-b-c}Mn_{b}X_{c}O_{2-α}T_{α} (0.90≤a≤1.8, 0≤b≤0.5, 0≤c≤0.5, 0<α<2); LiₐNi_{1-b-c}Mn_{b}X_{c}O_{2-α}T₂ (0.90≤a≤1.8, 0≤b≤0.5, 0≤c≤0.5, 0<α<2); LiₐNi_{b}E_{c}G_{d}O₂ (0.90≤a≤1.8, 0≤b≤0.9, 0≤c≤0.5, 0.001≤d≤0.1); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNi_{b}Co_{c}L¹_{d}GₑO₂ (0.90≤a≤1.8, 0≤b≤0.9, 0≤c≤0.5, 0≤d≤0.5, 0.001≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); QO₂; QS₂; LiQS₂; V₂O₅; LiV₂O₅; LiZO₂; LiNiVO₄; Li_{(3-f)}J₂(PO₄)₃ (0≤f≤2); Li_{(3-f)}Fe₂(PO₄)₃ (0≤f≤2); and LiₐFePO₄ (0.90≤a≤1.8)

In the above chemical formulae, A is selected from Ni, Co, Mn, or a combination thereof; X is selected from Al, Ni, Co, Mn, Cr, Fe, Mg, Sr, V, a rare earth element, or a combination thereof; D is selected from O, F, S, P, or combination thereof; E is selected from Co, Mn, or a combination thereof; T is selected from F, S, P, or a combination thereof; G is selected from Al, Cr, Mn, Fe, Mg, La, Ce, Sr, V, or a combination thereof; Q is selected from Ti, Mo, Mn, or a combination thereof; Z is selected from Cr, V, Fe, Sc, Y, or a combination thereof; J is selected from V, Cr, Mn, Co, Ni, Cu, or a combination thereof; L¹ is selected from Mn, Al, or a combination thereof.

The compounds may have a coating layer on the surface or may be mixed with another compound having a coating layer. The coating layer may include at least one coating element compound selected from the group consisting of an oxide of a coating element, a hydroxide of a coating element, an oxyhydroxide of a coating element, an oxycarbonate of a coating element, and a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or mixture thereof. The coating layer may be provided by a method having no adverse influence on properties of a positive active material by using these elements in the compound, and for example, the method may include any coating method such as spray coating, dipping, and the like, but is not illustrated in more detail since it is well-known in the related field.

In the positive electrode, the amount of the positive active material may be about 90 wt% to about 98 wt% based on the total weight of the positive active material layer.

In embodiments, the positive active material layer may further include a binder and a conductive material. The binder and the conductive material may be included in an amount of about 1 wt% to about 5 wt%, respectively based on the total amount of the positive active material layer.

The binder improves binding properties of positive active material particles with one another and with a current collector. Examples of the binder may be polyvinyl alcohol, carboxymethyl cellulose, hydroxypropyl cellulose, diacetyl cellulose, polyvinylchloride, carboxylated polyvinylchloride, polyvinyl fluoride, an ethylene oxide-containing polymer, polyvinyl pyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, or the like.

The conductive material is included to provide electrode conductivity, and any electrically conductive material may be used as a conductive material unless it causes a chemical change. Examples of the conductive material may include a carbon-based material such as natural graphite, artificial graphite, carbon black, acetylene black, ketjen black, a carbon fiber and the like; a metal-based material of a metal powder or a metal fiber including copper, nickel, aluminium, silver, and the like; a conductive polymer such as a polyphenylene derivative; or a mixture thereof.

The current collector may include Al.

The electrolyte includes a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), or the like. The ester-based solvent may include methyl acetate, ethyl acetate, n-propyl acetate, dimethyl acetate, methyl propionate, ethyl propionate, decanolide, mevalonolactone, caprolactone, or the like. The ether-based solvent may include dibutyl ether, tetraglyme, diglyme, dimethoxyethane, 2-methyltetrahydrofuran, tetrahydrofuran, or the like. The ketone-based solvent may include cyclohexanone, or the like. The alcohol-based solvent may include ethyl alcohol, isopropyl alcohol, and the like, and examples of the aprotic solvent include nitriles such as R-CN (where R is a C2 to C20 linear, branched, or cyclic hydrocarbon, and may include a double bond, an aromatic ring, or an ether bond), amides such as dimethylformamide, dioxolanes such as 1,3-dioxolane, sulfolanes, and the like.

The non-aqueous organic solvent may be used alone or in a mixture. If the non-aqueous organic solvent is used in a mixture, the mixture ratio may be controlled in accordance with a desirable battery performance, and it may be well known to those skilled in the related art.

The carbonate-based solvent may include a mixture with a cyclic carbonate and a linear carbonate. The cyclic carbonate and linear carbonate are mixed together in a volume ratio of about 1:1 to about 1:9, and if the mixture is used as an electrolyte, it may have enhanced performance.

The non-aqueous organic solvent may further include an aromatic hydrocarbon-based solvent as well as the carbonate-based solvent. The carbonate-based solvent and aromatic hydrocarbon-based solvent may be mixed together in a volume ratio of about 1:1 to about 30:1.

The aromatic hydrocarbon-based organic solvent may be an aromatic hydrocarbon-based compound represented by Chemical Formula 1.

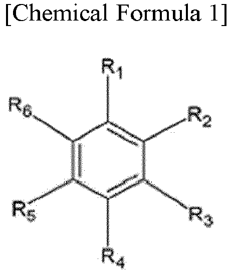

In Chemical Formula 1, R₁ to R₆ are the same or different and are selected from hydrogen, a halogen, a C1 to C10 alkyl group, a haloalkyl group (e.g, a C1 to C10 haloalkyl group), and a combination thereof,

Some examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, or a combination thereof.

The electrolyte may further include vinylethyl carbonate, vinylene carbonate, and/or an ethylene carbonate-based compound represented by Chemical Formula 2 as an additive for improving cycle life.

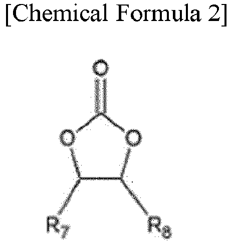

In Chemical Formula 2, R₇ and R₈ are the same or different and may each be independently hydrogen, a halogen, a cyano group (CN), a nitro group (NO₂), or a C1 to C5 fluoroalkyl group, provided that at least one of R₇ and R₈ is a halogen, a cyano group (CN), a nitro group (NO₂), or a C1 to C5 fluoroalkyl group, and R₇ and R₈ are not simultaneously hydrogen.

Examples of the ethylene carbonate-based compound may be difluoroethylene carbonate, chloroethylene carbonate, dichloroethylene carbonate, bromoethylene carbonate, dibromoethylene carbonate, nitroethylene carbonate, cyanoethylene carbonate, fluoroethylene carbonate, or the like. An amount of the additive for improving the cycle-life characteristics may be used within an appropriate range.

The lithium salt dissolved in an organic solvent supplies a battery with lithium ions, basically operates the rechargeable lithium battery, and improves transportation of the lithium ions between a positive electrode and a negative electrode. Examples of the lithium salt include at least one or two supporting salts selected from LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide: LiFSI), LiC₄F₉SO₃, LiClO₄, LiAlO₂, LiAlCl₄, LiPO₂F₂, LiN(CₓF₂ₓ₊₁SO₂)(C_{y}F_{2y+1}SO₂), wherein x and y are natural numbers, for example, an integer of about 1 to about 20, lithium difluoro(bisoxolato) phosphate, LiCl, LiI, LiB(C₂O₄)₂ (lithium bis(oxalato) borate: LiBOB) and lithium difluoro(oxalato)borate (LiDFOB). The concentration of the lithium salt may range from about 0.1 M to about 2.0 M. If the lithium salt is included at the above concentration range, an electrolyte may have excellent performance and lithium-ion mobility due to optimal electrolyte conductivity and viscosity.

A separator may be located between the positive electrode and the negative electrode depending on a type of a rechargeable lithium battery. The separator may use polyethylene, polypropylene, polyvinylidene fluoride or multi-layers thereof having two or more layers and may be a mixed multilayer such as a polyethylene/polypropylene double-layered separator, a polyethylene/polypropylene/polyethylene triple-layered separator, a polypropylene/polyethylene/polypropylene triple-layered separator, and the like.

FIG. 1 is an exploded perspective view of a rechargeable lithium battery according to an embodiment. The rechargeable lithium battery according to some embodiments is illustrated as a prismatic battery and may include variously shaped batteries such as a cylindrical battery, a pouch battery, and the like.

Referring to FIG. 1, a rechargeable lithium battery 100 according to an embodiment may include an electrode assembly 40 manufactured by winding a separator 30 disposed between a positive electrode 10 and a negative electrode 20 and a case 50 housing the electrode assembly 40. An electrolyte (not shown) may be impregnated in the positive electrode 10, the negative electrode 20 and the separator 30.

The following Examples and Comparative Examples are provided in order to highlight characteristics of one or more embodiments, but it will be understood that the Examples and Comparative Examples are not to be construed as limiting the scope of the embodiments. Further, it will be understood that the embodiments are not limited to the particular details described in the Examples and Comparative Examples.

### (Example 1)

An artificial graphite was used as a first active material.

An unspecified-shaped second active material including an agglomerated product (first core) in which natural graphite and Si (elemental Si, average particle diameter 100 nm) were agglomerated and a soft carbon coating layer positioned on the surface of the agglomerated product (first core) was used as an unspecified-shaped second active material (average size 10 µm). The mixing ratio of natural graphite, Si, and the soft carbon was a weight ratio of 4:4:2, and in the second active material, an amount of natural graphite was 40 wt%, an amount of Si was 40 wt%, and an amount of soft carbon was 20 wt%.

An ethylene (C₂H₄) gas was injected into Si (elemental Si, an average particle diameter 100nm) to perform a chemical vapor deposition (CVD) at 1000 °C, thereby preparing a spherical-shaped third active material (average particle diameter 6 µm) including a Si core (second core) and a soft carbon coating layer formed on the core. The weight ratio of the Si core and the coating layer was a weight ratio of 6. 5:3.5. The third active material had an urchin-type shape with ridges formed on the surface, a length from the surface to the end of the protrusion and depression which was outwardly protruded was 100 nm, and the thickness of the coating layer was 1000 nm.

The first active material, the second active material, and the third active material were mixed at a weight ratio of 50:15:35 to prepare a negative active material.

97.5 wt% of the negative active material, 1.5 wt% of styrene-butadiene rubber binder, and 1.0 wt% of carboxymethyl cellulose, were mixed in a water solvent to prepare a negative active material slurry.

The negative active material slurry was coated on a Cu foil current collector, dried and pressurized under a general procedure to prepare a negative electrode including the current collector and a negative active material layer formed on the current collector.

Using the negative electrode, a lithium metal counter electrode, and an electrolyte, a half-cell was fabricated. The electrolyte used was a 1.5 M LiPF₆ dissolved in a mixed solvent of ethylene carbonate, ethylmethyl carbonate and dimethyl carbonate (20:10:70 volume ratio).

### (Example 2)

A negative electrode and a half-cell were fabricated by the same procedure as in Example 1, except that the first active material, the second active material, and the third active material were mixed at a weight ratio of 50:25:25.

### (Example 3)

A negative electrode and a half-cell were fabricated by the same procedure as in Example 1, except that the first active material, the second active material, and the third active material were mixed at a weight ratio of 50:35:15 to prepare a negative active material.

### (Comparative Example 1)

A negative electrode and a half-cell were fabricated by the same procedure as in Example 1, except that the artificial graphite first active material was only used as the negative active material.

### (Comparative Example 2)

A negative electrode and a half-cell were fabricated by the same procedure as in Example 1, except that the first active material and the second active material were mixed at a weight ratio of 50:50 (i.e., the third active material was not present).

### (Comparative Example 3)

A negative electrode and a half-cell were fabricated by the same procedure as in Example 1, except that the first active material and the third active material were mixed at a weight ratio of 50:50 to prepare a negative active material (i.e., the second active material was not present).

### Experimental Example 1) Measurement of specific surface area and tapped density

N₂ gas was adsorbed/desorbed onto the negative active materials according to Examples 1 to 3 and Comparative Examples 1 to 3 and a specific surface area was measured by using a BET equipment. The results are shown in Table 1.

The tapped densities of the negative active materials according to Examples 1 to 3 and Comparative Examples 1 to 3 were measured. The results are shown in Table 1.

### Experimental Example 2) Measurement of capacity

The half-cells according to Examples 1 to 3 and Comparative Examples 1 to 3 were charged and discharged once to measure the charge capacity. The results are shown in Table 1.

### Experimental Example 3) Measurement of charge and discharge efficiency

The half-cells according to Examples 1 to 3 and Comparative Examples 1 to 3 were charged and discharged at 0.2 C once. The charge capacity is shown in Table 1. A ratio of the discharge capacity relative to the charge capacity at 0.2 C once, which was charge and discharge efficiency was measured. The results are shown in Table 1.

### Experimental Example 4) Measurement of rate capability

The half-cells according to Examples 1 to 3 and Comparative Examples 1 to 3 were charged and discharged at 0.2 C once and then charged and discharged at 2 C once. A ratio of the discharge capacity at 2 C relative to the discharge capacity at 0.2 C was measured. The results are shown in Table 1.

**Table 1**

| | Weight ratio of first active material:second active material:third active material | Tapped density (g/cc) | Specific surface area (m²/g) | Capacity (mAh/g) | Charge and discharge efficiency (%) | Rate capability (%) |
|---|---|---|---|---|---|---|
| Example 1 | 50:15:35 | 0.97 | 1.75 | 830 | 87.5 | 45 |
| Example 2 | 50:25:25 | 0.96 | 1.83 | 822 | 87.7 | 45 |
| Example 3 | 50:35: 15 | 0.95 | 1.89 | 813 | 87.9 | 46 |
| Comparative Example 1 | 100:0:0 | 1.05 | 1.00 | 350 | 92.5 | 42 |
| Comparative Example 2 | 50:50:0 | 0.90 | 2.03 | 795 | 88.1 | 43 |
| Comparative Example 3 | 50:0:50 | 1.00 | 1.63 | 848 | 87.3 | 40 |

As shown in Table 1, Examples 1 to 3 including all of the first active material, the second active material and the third active material at an appropriate range exhibited high capacity, and excellent charge and discharge efficiency and rate capability. On the other hand, Comparative Example 1 including only first active material exhibited significantly lower capacity and slightly deteriorated rate capability. Comparative Example 2 including only the first active material and the second active material exhibited very low tapped density of 0.90 g/cc and surprisingly low rate capability.

Comparative Example 3 including only the first active material and the third active material exhibited extremely low rate capability which was not practically available as the battery.

Example embodiments have been disclosed herein, and although specific terms are employed, they are used and are to be interpreted in a generic and descriptive sense only and not for the purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A negative active material, comprising:
a crystalline carbon first active material;
a second active material comprising a first core, which comprises crystalline carbon and a silicon-based material, and a first carbon coating layer positioned on the first core; and
a third active material comprising a second core, which comprises a silicon-based material, and a second carbon coating layer positioned on the second core.

2. The negative active material as claimed in claim 1, wherein the crystalline carbon comprises natural graphite, artificial graphite, or a combination thereof.

3. The negative active material as claimed in claim 1 or claim 2, wherein the silicon-based material comprises silicon, silicon oxide, or a combination thereof.

4. The negative active material as claimed in any one of claims 1 to 3, wherein the second carbon coating layer is amorphous carbon or semi-crystalline carbon.

5. The negative active material as claimed in any one of claims 1 to 4, wherein the first carbon coating layer is amorphous carbon.

6. The negative active material as claimed in any one of claims 1 to 5, wherein in the second active material, an amount of the crystalline carbon is about 35 wt% to about 45 wt% based on the total 100 wt% of the second active material, an amount of the silicon-based material is about 35 wt% to about 45 wt% based on the total 100 wt% of the second active material, and an amount of the first carbon coating layer is about 15 wt% to about 25 wt% based on the total 100 wt% of the second active material.

7. The negative active material as claimed in any one of claims 1 to 6, wherein a mixing ratio of the first active material, the second active material, and the third active material is about 50:12:38 to about 50:38:12 by a weight ratio.

8. The negative active material as claimed in any one of claims 1 to 7, wherein a mixing ratio of the first active material, the second active material, and the third active material is about 50:15:35 to about 50:35:15 by weight ratio.

9. The negative active material as claimed in any one of claims 1 to 8, wherein the third active material has a spherical shape.

10. The negative active material as claimed in any one of claims 1 to 9, wherein the third active material has a flat surface or has a corrugated surface.

11. A rechargeable lithium battery, comprising:
a negative electrode comprising the negative active material of any one of claims 1 to 10;
a positive electrode; and
an electrolyte.
